# EUROPEAN PATENT SPECIFICATION

(11) **EP 3 410 028 B1**
(45) Date of publication and mention of the grant of the patent: **26.07.2023**
(21) Application number: 18162569.0
(22) Date of filing: 19.03.2018
(51) Int. Cl.: F24F 13/06

(54) **JUNCTION BOX FOR VENTILATION**
VERBINDUNGSKASTEN FÜR DIE BELÜFTUNG
BOÎTE DE JONCTION POUR LA VENTILATION

(30) Priority: 29.05.2017 FI 20175475
(43) Date of publication of application: 05.12.2018
(73) Proprietor: FläktGroup Sweden AB, 551 84 Jönköping (SE)
(72) Inventor: SAARI, Vesa, 37800 AKAA (FI); JOKELA, Hanne, 33720 TAMPERE (FI)
(74) Representative: Kolster Oy Ab

(56) References cited:
- CH-A5- 693 283
- US-A- 1 557 066
- US-A- 4 479 737
- US-A- 4 776 484
- US-A- 5 318 474
- US-A1- 2003 077 169

## Description

The object of the present invention is a ventilation regulating box for regulating the air flow between a ventilation duct and a terminal device, such as a ceiling diffuser, which regulating box comprises at least one sleeve of the air inlet aperture and at least one sleeve of the air outlet aperture, and the body of which regulating box is essentially a rectangular prism in shape, the body of which regulating box is formed from at least two connected parts that are formed from at least an outer part and an inner part.

The invention thus relates to a regulating box for a ventilation duct, which regulating box is used e.g. before a terminal device for supply air, such as before a ceiling diffuser. A regulating box has typically one inlet aperture, on which is arranged a coupling sleeve. The regulating box is connected by means of the sleeve to a duct, from which air flows into the regulating box. The regulating box also has an outlet aperture, to which a coupling sleeve is likewise arranged, by means of which coupling sleeve the regulating box can be connected to a terminal device, such as to a ceiling diffuser. Typically, the coupling sleeve of the inlet aperture of a regulating box is aligned towards the side and it is therefore connected to a horizontal duct. The coupling sleeve of the outlet aperture of the regulating box is, for its part, aligned directly downwards, in which case it is at a 90° angle with respect to the coupling sleeve of the inlet aperture. A regulating box can, of course, also be used in connection with the exhaust air, in which case the flow direction is the opposite.

Some regulating boxes, in which the angle between the duct joint and the diffuser is 90°, function in such a way that the outward blowing direction is horizontal to the side, but the duct joint can be from above from below or from the side.

There is also a box model that does not have a 90° angle between the duct coupling and the diffuser coupling. In this model, the blowing occurs in a straight line from the front wall.

The purpose of a regulating box is, in accordance with its name, to control the air flow. A regulating box can also comprise means for adjusting and measuring the air flow. A regulating box can also be provided with noise damping elements, in which case it also damps noise.

US 5 318 474 A provides the basis for the preamble of claim 1 and discloses a ventilation regulating device with a box-shaped backpan connected to a ceiling air duct and a flow directing assembly attached to the backpan. The flow directing component has a perforated face panel made up of flat surfaces in horizontal and angular planes, forming a substantially semicylindrical shape. Inside the face panel are four vanes that span its length, for controlling the direction of air flow.

US 2003/077169 A1 discloses an air handler comprising a box-shaped enclosure with an inlet, an outlet and an access opening providing access to the various components inside.

US 4 479 737 A discloses solutions for mechanically interlocking the ends of two mutually perpendicular metal wall sections by using a receiving slot for retaining an inserted tongue.

The present invention relates to the structure of a regulating box.

Nowadays the walls of a regulating box are typically composed of at least three parts; for example, two separate ends and one unbroken envelope. In the assembly, a V-shape is folded onto the edges, interleaved with the counterpart and a crimped connection is made. Sealing compound is applied to the crimped connections from inside to seal the regulating box. The edges can also be joined with POP rivets, by spot welding, arc welding or with rotary-cut ends. Combinations of these connection methods are also in use.

According to what is known in the art, a problem in manufactured regulating boxes is the protruding parts of the sheet metal and the jointing seams because they take up space and hamper installation. The aim is to make the size of a regulating box as small as possible. Another aim is to modernize the manufacturing technique and exterior appearance.

The purpose of the present invention is to provide a new type of ventilation regulating box to which the problems described above are not attached. The regulating box according to the invention is defined in claim 1.

A preferred embodiment of the regulating box according to the invention is characterized in that on the end of the inner part are end claws that lock into holes in the edge folds of the outer part.

Yet another preferred embodiment of the invention is characterized in that the claws have a sharp internal angle into which the corresponding edge of a counterpart locks when assembling the regulating box.

Some of the advantages of the invention that can be mentioned is that fabrication of the regulating box is speeded up owing to the short assembly time. Additionally, the exterior appearance of the regulating box is better than before, because there are no extra protruding seams, welding traces or POP rivets. Connecting the parts in a regulating box according to the invention does not require a machine or tools. The structure is rigid, robust and tight. In the following, the invention will be described in more detail by the aid of some preferred embodiments with reference to the attached drawings, wherein
Fig. 1 presents two connectable parts of a regulating box according to the invention when separate from each other.
Fig. 2 presents the parts of Fig. 1 when connected.
Fig. 3 presents an oblique top view of the regulating box according to the invention.
Fig. 4 presents a magnified and partially sectioned detail A from Fig. 3.
Fig. 5 presents a magnified and partially sectioned detail B from Fig. 3.
Fig. 6 presents a cross-section of a claw according to the invention.

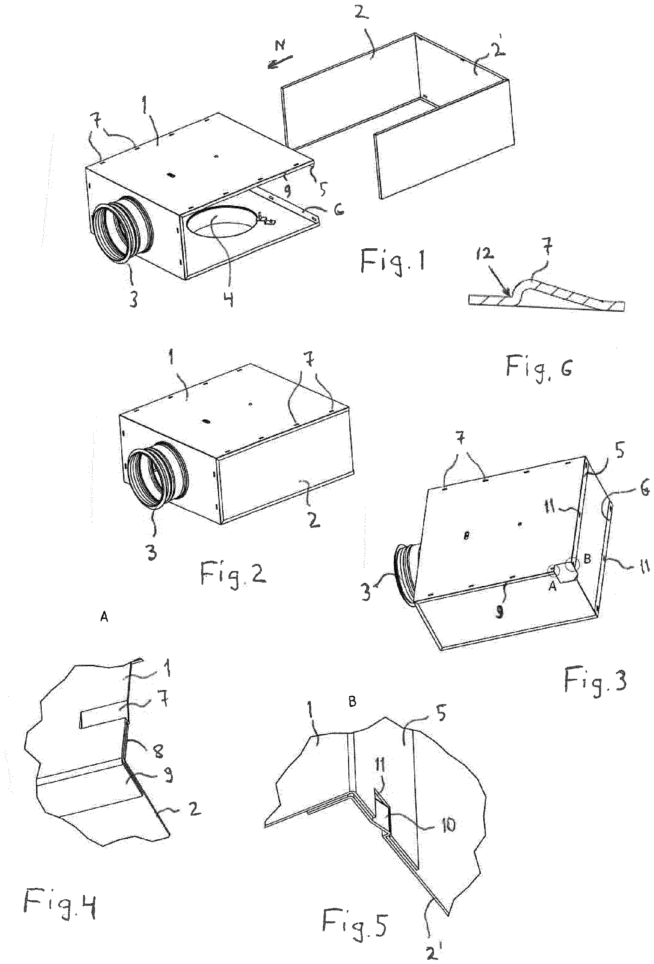

Fig. 1 thus presents the two essentially U-shaped parts 1 and 2 of the body of a regulating box according to the invention, which are connected together in the manner described by the arrow N. The body of the regulating box according to Figs. 2 and 3, which is essentially a rectangular prism in shape, is then obtained. Each U-shaped part 1, 2 is bent from steel sheet without seams or other joinings.

Hereinafter, part 1 is the so-called outer part and part 2 is the so-called inner part. The outer part 1 comprises a top plate, a bottom plate and one end. Correspondingly, the inner part 2 comprises both sides and also the other end. The free ends of the outer part 1 are spread slightly in the assembly phase so that the inner part 2 can be put into position past the edge folds 5, 6. The spreading springs back immediately when the grip is detached and at the same time the parts lock to each other in the manner described hereinafter.

The outer part 1 has prefabricated sleeves 3, 4 for connecting the regulating box to a ventilation duct and to a terminal device, such as a ceiling diffuser, in a manner that is *per se* known in the art.

Near the edges of the outer part 1 are so-called claws 7 that position the edge fold 8 of the inner part 2 with the edge fold 9 of the outer part 1 (Fig. 4). The claws, 3-5 units per edge, are arranged on the long sides at essentially regular intervals. The number on the end can be e.g. 2 units per edge. On the end 2' of the inner part 2 are corresponding end claws 10 that lock the outer part 1 into rectangularly-shaped holes 11 in the edge folds 5 and 6 when assembling the regulating box (Fig. 5). There are e.g. 3 units of end claws per edge, in other words e.g. 6 units on the entire end. These numbers do not limit the invention, but instead are preferred embodiments.

The edge folds 5, 6, 8, 9 are essentially 90° folds inwards.

Sealing compound is extruded into the inside corners of the edge folds 5, 6, 9 of the outer part 1 before assembly, and after assembly when it dries the parts lock finally to each other. The purpose of the claws 7, 10 is to keep the parts 1, 2 of the regulating box unmoved in relation to each other during the drying.

Fig. 6 presents a cross-section of a claw 7. What is essential in the shape is the sharp corner marked with the reference number 12, into which corner the front edge of the edge fold 8 of the inner part 1 locks in the manner presented by Fig. 4. The end claw 10 on the inner part can be essentially similar in shape to the claw 7. In this case the edge of the essentially rectangularly-shaped hole 11 in the outer part locks into the sharp corner.

It is obvious to the person skilled in the art that the invention is not limited to the embodiments presented above, but that it can be varied within the scope of the claims presented below. Connecting the outer and inner part to each other takes place in the same way in both the top part and the bottom part, although in the description and figures the connecting of the top part is mainly shown.

The characteristic features possibly presented in the description in conjunction with other characteristic features can also, if necessary, be used separately to each other, as long as not departing from the scope of the invention as defined in the appended claims.

## Claims

1. A ventilation regulating box for regulating the air flow between a ventilation duct and a terminal device, such as a ceiling diffuser, which regulating box comprises a body which is essentially a rectangular prism in shape, the body comprises two connected sheet parts (1, 2), an outer part (1) and an inner part (2), the regulating box comprises at least one air inlet aperture on which is arranged a coupling sleeve (3) configured to be connected to a ventilation duct and at least one air outlet aperture on which is arranged a coupling sleeve (4) configured to be connected to a terminal device, **characterized in that**
- the outer part (1) and the inner part (2) are both essentially U-shaped such that the U-shaped outer part (1) comprises a top plate, a bottom plate and one end of the rectangular prism shaped regulating box, and respectively the U-shaped inner part (2) comprises both sides and the other end of said regulating box,
- the U-shaped outer part (1) comprises first free edges (5, 6, 8) and the U-shaped inner part (2) comprises second free edges (9),
- the first and second free edges comprise respectively first edge folds and second edge folds being bent essentially 90° inwards,
- the U-shaped inner part and the U-shaped outer part comprise claws (7, 10) configured to position the first edge fold of the U-shaped inner part (2) with the second edge fold of the U-shaped outer part (1) in the assembled state of the U-shaped inner part and the U-shaped outer part forming the regulating box and to lock the inner part and the outer part to each other.

2. Regulating box according to claim 1, **characterized in that** on the end (2') of the U-shaped inner part (2) are end claws (10), that lock into holes (11) in the edge folds (5) of the U-shaped outer part (1).

3. Regulating box according to claim 1 or 2, **characterized in that** the claws (7, 10) have a sharp inside corner (12) into which the corresponding edge of a counterpart locks when assembling the regulating box.

4. Regulating box according to any of claims 1-3, **characterized in that** sealing compound is extruded into the inside corners of the edge folds (5, 6, 9) of the U-shaped outer part (1), which compound when it dries after assembly locks the parts finally to each other.

## Patentansprüche

1. Lüftungsregelkasten zum Regeln des Luftstroms zwischen einer Lüftungsleitung und einer Endvorrichtung, wie z. B. einem Deckendiffusor, wobei der Regelkasten einen Körper umfasst, der im Wesentlichen die Form eines rechteckigen Prismas hat, wobei der Körper zwei verbundene Plattenteile (1, 2), ein Außenteil (1) und ein Innenteil (2), umfasst, der Regelkasten mindestens eine Lufteinlassöffnung, an der eine Kupplungsmuffe (3) angeordnet ist, die so konfiguriert ist, dass sie mit einer Lüftungsleitung verbunden werden kann, und mindestens eine Luftauslassöffnung umfasst, an der eine Kupplungsmuffe (4) angeordnet ist, die so konfiguriert ist, dass sie mit einer Endvorrichtung verbunden werden kann, **dadurch gekennzeichnet, dass**
- das Außenteil (1) und das Innenteil (2) beide im Wesentlichen U-förmig sind, so dass das U-förmige Außenteil (1) eine obere Platte, eine untere Platte und ein Ende des in Form eines rechteckigen Prismas ausgebildeten Regelkastens umfasst, und das U-förmige Innenteil (2) beide Seiten und das andere Ende des Regelkastens umfasst,
- das U-förmige Außenteil (1) erste freie Kanten (5, 6, 8) und das U-förmige Innenteil (2) zweite freie Kanten (9) umfasst,
- die ersten und zweiten freien Kanten erste Randfalten bzw. zweite Randfalten, die im Wesentlichen um 90° nach innen gebogen sind, umfassen,
- das U-förmige Innenteil und das U-förmige Außenteil Krallen (7, 10) umfassen, die konfiguriert sind, um die erste Randfalte des U-förmigen Innenteils (2) mit der zweiten Randfalte des U-förmigen Außenteils (1) im zusammengesetzten Zustand des U-förmigen Innenteils und des U-förmigen Außenteils, die den Regelkasten bilden, positionieren und das Innenteil und das Außenteil miteinander verriegeln.

2. Regelkasten nach Anspruch 1, **dadurch gekennzeichnet, dass** sich am Ende (2') des U-förmigen Innenteils (2) Endkrallen (10) befinden, die in Löcher (11) in den Randfalten (5) des U-förmigen Außenteils (1) einrasten.

3. Regelkasten nach Anspruch 1 oder 2, **dadurch gekennzeichnet, dass** die Krallen (7, 10) eine scharfe Innenecke (12) aufweisen, in die die entsprechende Kante eines Gegenstücks beim Zusammenbauen des Regelkastens einrastet.

4. Regelkasten nach einem der Ansprüche 1 bis 3, **dadurch gekennzeichnet, dass** in die Innenecken der Randfalten (5, 6, 9) des U-förmigen Außenteils (1) Dichtungsmasse extrudiert ist, die beim Trocknen nach dem Zusammenbau die Teile endgültig miteinander verriegelt.

## Revendications

1. Boîte de régulation de ventilation pour réguler le flux d'air entre un conduit de ventilation et un dispositif terminal, tel qu'un diffuseur de plafond, laquelle boîte de régulation comprend un corps qui a essentiellement une forme de prisme rectangulaire, le corps comprend deux parties de feuille (1, 2) raccordées, une partie externe (1) et une partie interne (2), la boîte de régulation comprend au moins une ouverture d'entrée d'air sur laquelle est agencé un manchon de couplage (3) configuré pour être raccordé à un conduit de ventilation et au moins une ouverture de sortie d'air sur laquelle est agencée un manchon de couplage (4) configuré pour être raccordé à un dispositif terminal, **caractérisée en ce que** :
la partie externe (1) et la partie interne (2) sont toutes deux essentiellement en forme de U de sorte que la partie externe (1) en forme de U comprend une plaque supérieure, une plaque inférieure et une extrémité de la boîte de régulation en forme de prisme rectangulaire, et respectivement la partie interne (2) en forme de U comprend deux côtés et l'autre extrémité de ladite boîte de régulation,
la partie externe (1) en forme de U comprend des premiers bords libres (5, 6, 8) et la partie interne (2) en forme de U comprend des seconds bords libres (9),
les premiers et seconds bords libres comprennent respectivement des premiers plis de bord et des seconds plis de bord qui sont pliés essentiellement à 90° vers l'intérieur,
la partie interne en forme de U et la partie externe en forme de U comprennent des griffes (7, 10) configurées pour positionner le premier pli de bord de la partie interne (2) en forme de U avec le second pli de bord de la partie externe (1) en forme de U à l'état assemblé de la partie interne en forme de U et de la partie externe en forme de U qui forment la boîte de régulation et pour verrouiller la partie interne et la partie externe entre elles.

2. Boîte de régulation selon la revendication 1, **caractérisée en ce que** sur l'extrémité (2') de la partie interne (2) en forme de U, on trouve des griffes d'extrémité (10) qui se verrouillent dans des trous (11) dans les plis de bord (5) de la partie externe (1) en forme de U.

3. Boîte de régulation selon la revendication 1 ou 2, **caractérisée en ce que** les griffes (7, 10) ont un coin intérieur tranchant (12) dans lequel le bord correspondant d'une contrepartie se verrouille lors de l'assemblage de la boîte de régulation.

4. Boîte de régulation selon l'une quelconque des revendications 1 à 3, **caractérisée en ce que** le composé d'étanchéité est extrudé dans les coins intérieurs des plis de bord (5, 6, 9) de la partie externe (1) en forme de U, lequel composé, lorsqu'il sèche après l'assemblage, verrouille les parties finalement entre elles.
